# EUROPEAN PATENT SPECIFICATION

(11) **EP 3 447 356 B1**
(45) Date of publication and mention of the grant of the patent: **22.09.2021**
(21) Application number: 18189759.6
(22) Date of filing: 20.08.2018
(51) Int. Cl.: F16L 55/175, F16L 55/18

(54) **PIPE REPAIR METHOD AND KIT**
VERFAHREN UND ANORDNUNG ZUM REPARIEREN VON ROHREN
MÉTHODE ET KIT DE RÉPARATION DE CONDUITES

(30) Priority: 21.08.2017 GB 201713402
(43) Date of publication of application: 27.02.2019
(73) Proprietor: M W Polymer Products Ltd, Little Eaton, Dergyshire DE21 5EG (GB)
(72) Inventor: Wild, Michael David, Little Eaton, Derbyshire DE21 5EG (GB); Wild, Michael Joseph, Little Eaton, Derbyshire DE21 5EG (GB); Moore, David, Little Eaton, Derbyshire DE21 5EG (GB)
(74) Representative: Swindell & Pearson Limited

(56) References cited:
- DE-A1- 2 441 563
- US-A- 3 938 774
- US-B1- 6 237 640

## Description

This invention concerns a method of repairing pipes, and particularly repairing pipes, a kit of parts usable in such a method, a multipart structure usable in such a method, and a pipe repair carried out by such a method.

In for instance multi occupancy buildings, it is conventional to provide a gas supply pipe on the outside of the building, often referred to as a riser pipe, with connections from a riser pipe to each building unit entering the building adjacent to each respective unit.

Such supply pipes, and particularly when made of metal, are prone to corrosion due to their exposure to the elements. This is particularly so at locations where water may regularly contact the pipes, for instance when dripping from a balcony, gutter or other structure. Also corrosion can be a particular problem adjacent to mounting brackets which mount the riser pipe to a wall or other fixture. Here chemical reactions can occur at this point, sometimes due to electric currents developing, causing additional corrosion.

Plastic pipes can be used for gas, water or sewage. With heat fused connections, such connections can over time become weak and potentially fail. It is therefore desirable to sometimes strengthen such connections but without affecting the flow through such pipes.

US3938774 A discloses sealing a leaking joint in a pipeline by locating a separable aluminium mould around the joint to form in conjunction with the pipeline a mould chamber enclosing the joint. Sealant is injected into the mould chamber and the volume of the mould chamber is reduced by deforming a flexible wall of the chamber to pressurize the sealant to a pressure above that inside the pipeline until the sealant has solidified around the joint. The aluminium mould is then removed.

According to a first aspect of the invention there is provided a method of repairing a pipe according to claim 1.

A support member may be wrapped around part of the pipe being repaired, and the support member may be in the form of a tape, which may be made of carbon fibre.

The settable material may be a plastics material resin, and may be a polyurethane or methacrylate resin.

The method may also include fixing one or more new brackets to a wall or other fixture, which mounting brackets engage with the multipart structure. The mounting brackets may engage with the multipart structure so as to permit limited longitudinal relative movement therebetween.

The mounting brackets may define a circular cross section opening through which the multipart structure extends.

The parts of the multipart structure may be glued together in position around the pipe.

Existing mounting brackets on the pipe may be removed, and may only be removed after one or more new mounting brackets has been fixed to a wall or fixture.

Alternatively, existing mounting brackets on the pipe may be left in place, and the multipart structure may sealingly locate around the existing mounting brackets. The existing mounting brackets may be disconnected from a wall or structure to which they were initially mounted.

According to a second aspect of the invention there is provided a kit of parts engageable together to provide a multipart structure usable in a method according to any of the preceding paragraphs, this kit of parts is the subject-matter of claim 7.

The kit of parts includes two end members, with each end member including two parts which each extend for substantially 180° coaxially with the pipe, engageable together, each end member defining a seal around the pipe.

The parts of the end members may include inter engaging formations, and may include respective male and female formations on opposite sides of the parts. The male and female formations may include elongate projections and corresponding slots.

Each end member may define an external circumferential recess engageable with a part of a mounting bracket which extends around the recess. The recess may be longer than a part of a mounting bracket which locates therein, so as to permit limited relative longitudinal movement therebetween.

The end members may not include any edges which are located externally in use, which edges extend perpendicularly to a pipe to be repaired, nor any such edges which extend at an acute angle relative to each other.

Each end member may define a first cylindrical space towards an end of the end member, which first cylindrical space is a sliding fit on a pipe to be repaired, and provides a seal around a pipe to be repaired.

Each end member may define a second cylindrical space, spaced from an end of the end member, which second cylindrical space defines an annular confined space around a pipe to be repaired.

The end members may include at least one opening into the annular space.

The kit of parts includes intermediate members, with each intermediate member including two parts which extend for substantially 180° coaxially with a pipe to be repaired, the intermediate members extendable between two end members to define an annular confined space around a gas pipe to be repaired, between the two end members.

One or more intermediate members may include connecting formations engageable with the ends of other intermediate members.

The end members may include connecting formations engageable with the ends of intermediate members. The connecting formations may define a sleeve of reduced diameter locatable into ends of the intermediate members.

One or more intermediate members may include encasing formations to engage around an existing bracket on a pipe. The encasing formations may include an opening to receive a part of an existing bracket extendable from a pipe to a wall or fixture. A grommet or other seal may be provided in the opening to engage with the part of the bracket extending through the opening.

One or more intermediate members may include internal formations engageable with a pipe to provide a correct spacing therearound.

One or more intermediate members may include formations for surrounding joints in a pipe to other pipes.

One or more intermediate formations may include formations to locate around bends in a pipe.

According to a third aspect of the invention there is provided a multipart structure made from a kit of parts according to any of the preceding fifteen paragraphs.

The multipart structure may include a pair of end members with a plurality of intermediate members extending therebetween.

The intermediate members may be offset on opposite sides of a pipe such that joins between intermediate members on one side of the pipe are not opposite joins between intermediate members on the other side of the pipe.

According to a fourth aspect of the invention there is provided a pipe repair carried out by a method according to any of the preceding paragraphs.

Embodiments of the present invention will now be described by way of example only and with reference to the accompanying drawings, in which:-
Figs. 1 to 6 are respectively diagrammatic plan, view from beneath, side view, end view, perspective view from above and perspective view from below of a first component usable in the invention;
Figs. 7 to 12 are respectively similar views to Figs. 1 to 6 but of a second component according to the invention;
Figs. 13 to 18 are respectively similar views to Figs. 1 to 6 but of a third component usable with the invention;
Fig. 19 is a diagrammatic perspective view from above of a fourth component according to the invention;
Fig. 20 is a diagrammatic side view showing part of a first repair being carried out according to the invention;
Fig. 21 is a diagrammatic side view of a second repair being carried out according to the invention;
Fig. 22 is a diagrammatic side view of part of a third repair carried out according to the invention; and
Fig. 23 is a diagrammatic side view of a fourth repair carried out according to the invention.

The drawings show components usable to repair an in situ pipe. In this instance the pipe is a metal gas pipe, but the components can be used on pipes carrying other materials such as water or sewage. The pipes may be made of different materials such as plastic materials.

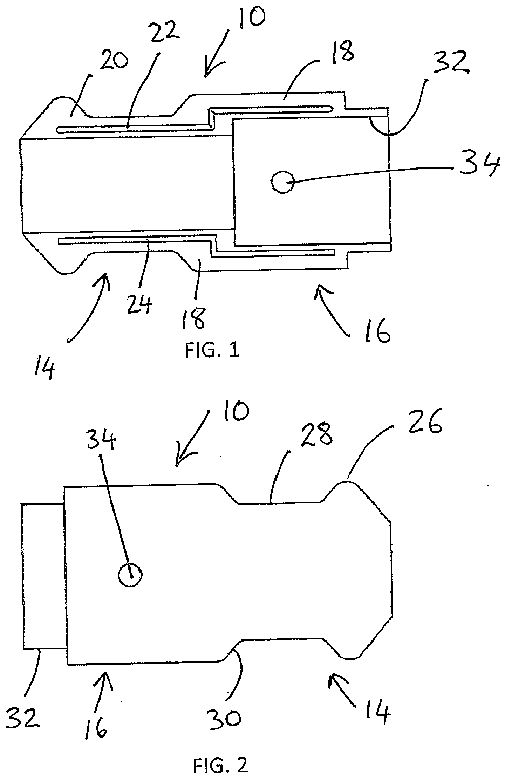

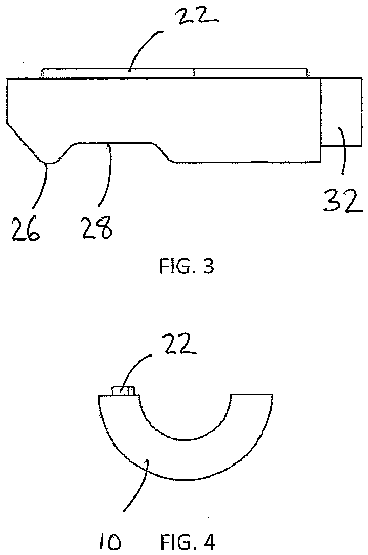

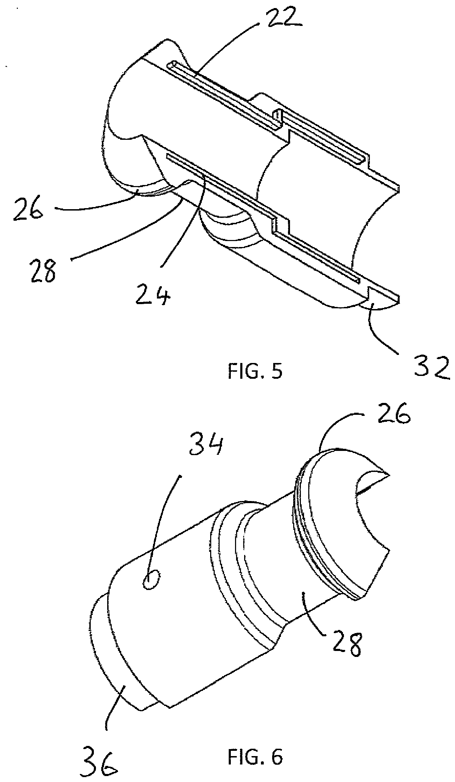

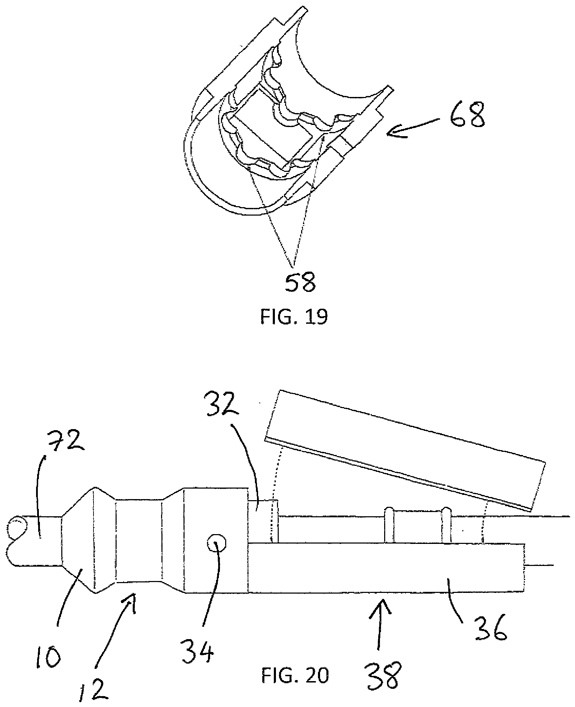

Figs. 1 to 6 show a first component 10 which in combination with a similar such first component 10 can produce an end member 12 as shown for instance in Figs. 20 to 23. The first component 10 extends around a central axis for substantially 180° and defines an end section 14 on the left hand side in Fig. 1, and a sealing section 16 as shown on the right hand side in Fig. 1. The end section 14 in combination with the end section 14 of a similar such component 10, together define a cylindrical space to slidingly fit on a pipe.

The sealing section 16 again in combination with the sealing section 16 of a similar such component 10, define a wider second cylindrical space of a size to sealingly surround a pipe leaving an annular confined space therearound. Each first component 10 has flat radial edges 18 engageable with the edges 18 of other such components 10 to mount the first components 10 together. One edge 20 includes a male mounting formation in the form of an upstanding ridge 22 spaced from the periphery of each of the edges, which ridge 22 is provided on the upper side as shown in Fig. 1. A corresponding female mounting slot 24 is provided on the lower side as shown in Fig. 1 of a corresponding shape and size to receive the male mounting ridge 22.

The exterior of the end member 10 around the first cylindrical space has a lip 26 at the left hand end which extends into a circumferential recess 28 defined by the lip 26, and the increased width of the first components 10 surrounding the second wider cylindrical space. The edges of the lip 26 and the edge 30 defining the transformation from the first to the second cylindrical space are inclined relative to the longitudinal direction of the pipe.

Extending from the right hand end of the second cylindrical space is a mounting part in the form of a cylindrical sleeve 32 of reduced external diameter. An opening 34 is provided through the walls providing the second cylindrical space, to define a port.

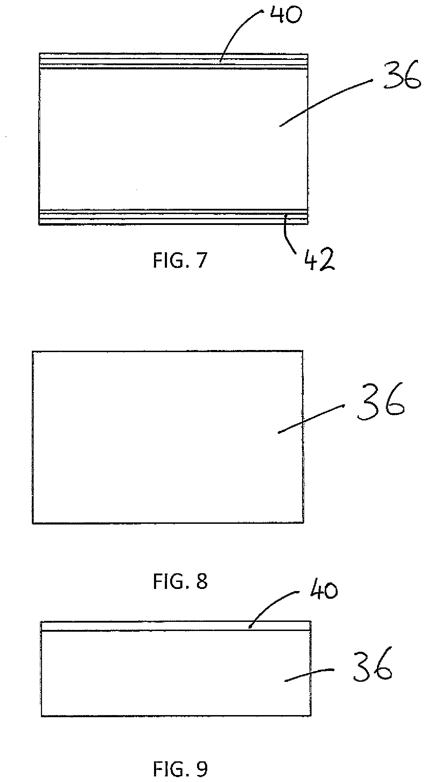

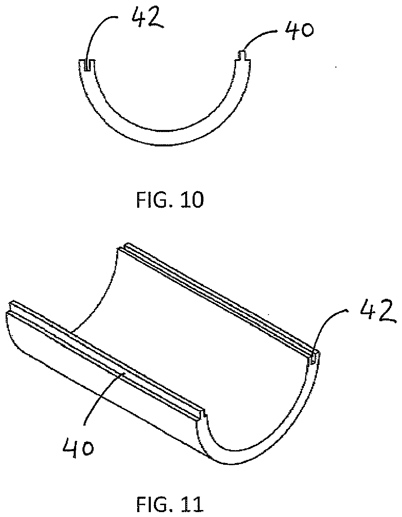

Figs. 7 to 12 illustrate a second component 36 which in combination with one or more other such components 36 form an intermediate member 38. The second component 36 is again semi-circular in cross section, so as together with another such second component 36 define a cylindrical intermediate member 38. Again connection formations in the form of a ridge 40 and a corresponding slot 42 are provided on opposite sides of the second component 36.

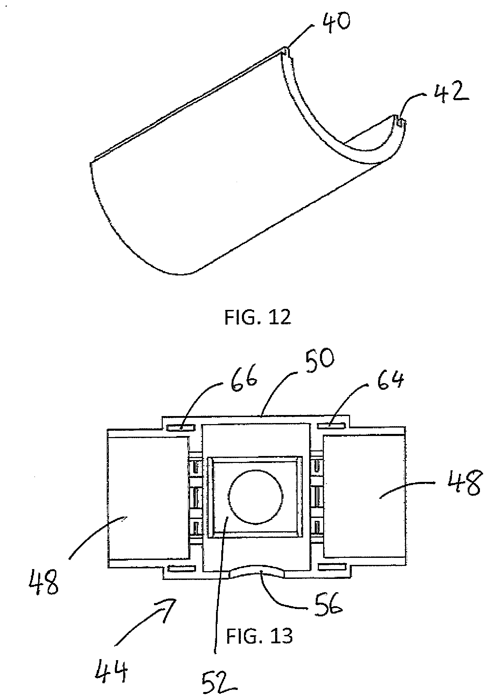

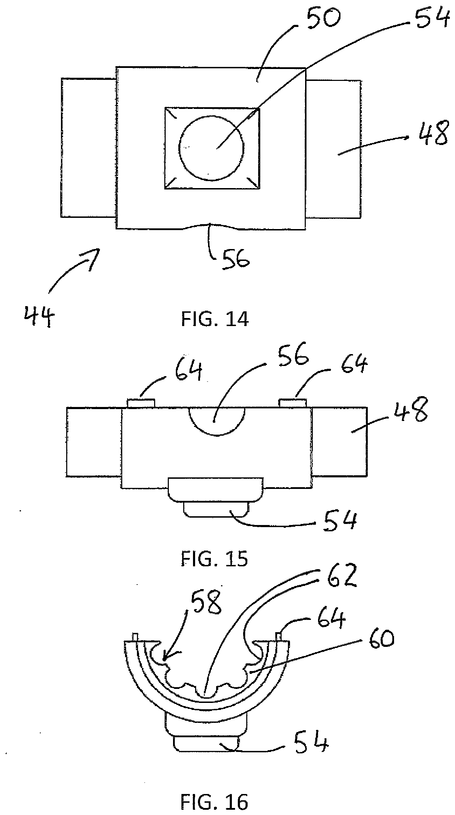

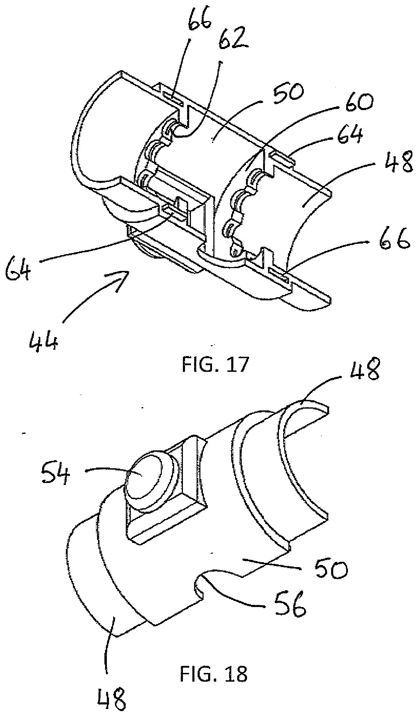

Figs 13 to 18 show a third component 44 which together with a similar third component 44 form a bracket receiving intermediate member 46. The third component 44 includes parts 48, at each end which provide connecting cylindrical connecting sleeves to each end of the member 46, similar to the connection sleeve on the end member 12. A central portion 50 of the third component 44 has an outwardly extending recess 52 defined by a profiled projection 54, to receive an existing mounting bracket on for instance a gas pipe. A semicircular cut out 56 is provided in an edge of the central portion 50 to permit a tie from the bracket to extend therethrough. If required a gland or washer could be fitted across the cut out 56.

Locating formations 58 are provided on the inner face of the central portion 50 at each end thereof. The locating formations 58 comprise an inner annular wall 60 to reduce the internal diameter so as to be engageable with a pipe extending therethrough to retain the pipe centrally aligned. A plurality of semi-circular recesses 62 are provided in the edge of the wall 60 to permit fluid to pass therethrough.

Formations are again provided to enable mounting together of two third components 44 to provide a bracket receiving intermediate member 46. In this instance respective male projections 64 or corresponding female slots 66 are provided on each third component 44 with a pair of projections 64 and a pair of slots 66 being provided on respective opposite corners to each other.

Fig. 19 shows a further component 68 which in combination with a similar such component 68 provides an intermediate member 70 which is similar to the bracket receiving intermediate member 46 except that it does not include the outwardly extending bracket receiving formation.

Fig. 20 shows part of a repair according to the invention being made. In this instance two first components 10 have been mounted together to provide an end member 12 surrounding a gas pipe 72. The first components 10 will be glued to the gas pipe 72 by applying glue to the inside walls which define the first cylindrical space, and to the radial edges to glue two end members onto the pipe and together. As can be seen a second component 36 has been mounted to the end member 12, and a second component 36 is being bought into position. The pair of second components 36 will be glued together and glued onto the cylindrical sleeve of the end member.

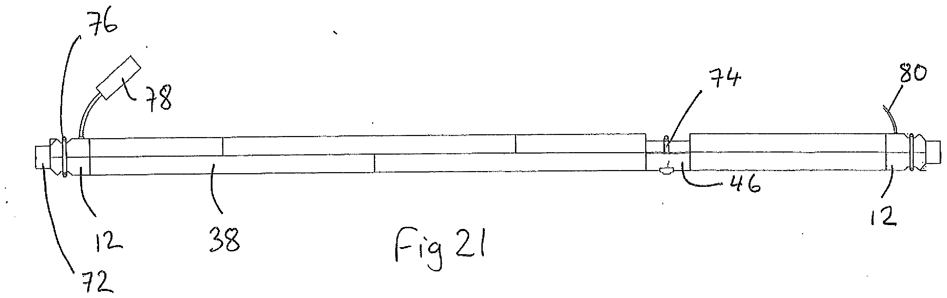

Fig. 21 shows a repair of a gas pipe 72 with a spaced pair of end members 12 with a plurality of intermediate members 38 extending therebetween. As can be seen the second components 36 in the intermediate members 38 are off set relative to each other, such that the connections between adjacent second components 36 on the side of the pipe 72 are not opposite any connections between second components 36 on the other side of the pipe 72 as shown.

A bracket receiving intermediate member 46 is provided in the length of intermediate members 38. The bracket receiving intermediate member 46 is shown part cut away to illustrate the original bracket 74. Two new mounting brackets 76 are shown each engaging in the circumferential recess 28 in a respective one of the end members 12. A supply 78 of plastics repair material is shown connected to an opening 34 in a one of the end members 12. A vent pipe 80 is provided in an opening 34 in the end member 12 at the opposite end of the repair, such that when repair material starts to pass out through the vent pipe 80, this is an indication that the gas pipe 72 is fully surrounded by the plastics repair material.

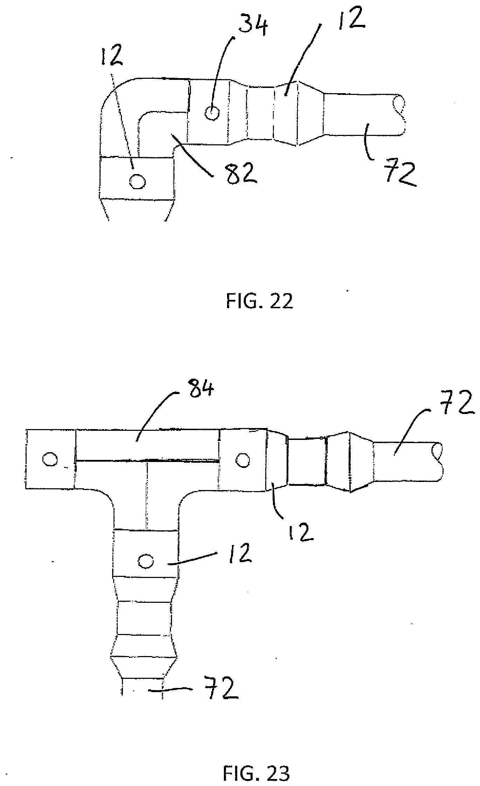

Fig. 22 shows part of a further repair to a gas pipe 72. In this instance an intermediate component 82 is provided which turns through 180° making this repair applicable onto the elbow of a gas pipe 72. Other than the 180° bend, the intermediate component 82 is similar to the intermediate member 38.

Fig. 23 shows a still further repair of a gas pipe 72 which includes a T shape joint. A T shape intermediate component 84 is provided with three limbs. Again the T shape intermediate component 84 other than the T shape, is similar to the intermediate member 38. On both of the repairs shown in Figs. 22 and 23 respective end members 12 are again used.

The use of the above components to carry out repair of an in situ gas pipe can be carried out as follows. An end member 12 is mounted onto the gas pipe 72 by gluing together two first components 10 onto the gas pipe 72. An appropriate intermediate member or members are mounted onto the pipe 74 using second components 36 and perhaps also components 44 and 68, leading to a further end member 12

Once an appropriate structure has been formed around the area of pipe 72 to be repaired, a settable material such as a polyurethane or methacrylate resin is pumped into the confined space defined around the gas pipe 72. The resin from the supply 78 is pumped through one of the ports in a first member 12 at one end of the space. An exit tube 80 is provided at a port at the opposite end of the space such that when resin comes through the exit tube 80 this illustrates that the confined space has been filled with resin. Once the resin sets then a seal is provided around the pipe 72. The enclosed pipe 72 will now be in an anaerobic condition such that further corrosion of the pipe 72 should not occur to any significant degree.

In practice, the structure formed would usually be mounted to a wall or fixture by new wall fitting brackets 76, which brackets 76 define a loop which can locate around the recess 28 of the end members 12, and the length of the recess 28 is such as to permit limited longitudinal movement of the structure relative to the bracket 76. With existing brackets 74 it is generally considered advisable to retain these on the pipe 72, as it may be found that the brackets 74 are actually holding the pipe 72 together. The existing bracket 74 will be received in a bracket receiving intermediate component 46. The extension from the bracket which will lead to a mounting on a wall will pass through the cut out 56. If required a washer or grommet may be provided in the cut out 56 to surround the extension. Once the new brackets 76 are mounted to the wall and are holding the structure in place, the extension from the existing bracket 74 may if required be cut but retained on the pipe 72.

There is thus described a method and apparatus and also a kit of parts, for providing a secure repair for instance on a pipe. The kit of parts allows for appropriate formations to be made dependent on particular circumstances. The various components of the kit of parts can readily be located in position in situ and glued into position. Once a formation is in place with an appropriate resin having filled the confined space, a long term and secure repair should be provided. The inclined edges of the lips, and the absence of an acute angle between any components, means there should not be any traps for rainwater or other liquids which can cause corrosion.

As indicated the method and apparatus can be used other than on metal gas pipes. For example plastic pipes usable for instance for gas, water or sewage, can be repaired in a similar manner. With plastic pipes heat fused connections can become weak. In such an instance the connections can be wrapped with a support member before a repair is carried out therearound. The support member may be in the form of a tape which could be made for example of carbon fibre.

The invention being defined by the claims, it is to be realised that a wide range of other modifications may be made without departing from the scope of the invention. For instance, different shape components may be provided, and in some instances it may be necessary to design bespoke components to fit on a particular shape pipe. The components may be mountable together in a different way, and with different formations. Existing brackets may be removed, or received by the apparatus in a different way.

The components may be made of a range of different materials including plastics materials. At least some of the components may be made of a fireproof material, which may be particularly important for instance with gas pipes.

## Claims

1. A method of repairing a pipe (72), the method comprising:
mounting a multipart structure on the pipe around an area to be repaired, the multipart structure including:
two end members (12), with each end member including two parts (10) which each extend for substantially 180° coaxially with the pipe, engageable together, each end member being for defining a seal around the pipe, and
one or more intermediate members (38, 46, 70), with each intermediate member including two parts (36, 44, 68) which extend for substantially 180° coaxially with the pipe to be repaired, the one or more intermediate members extendable between the two end members to define a confined space around the gas pipe to be repaired, between the two end members,
the parts in combination encircling the pipe such that the parts can be located onto the pipe in situ, the end members (12) providing two spaced seals around the pipe, one on either side of the area to be repaired, with the multipart structure defining the confined space extending within the end members and within the one or more intermediate members around the pipe between the two seals,
and
filling the confined space with a settable material to produce a solid seal around the area being repaired.

2. A method according to claim 1, **characterised in that** the method includes fixing two new brackets (76) to a wall or other fixture, which mounting brackets engage with the multipart structure.

3. A method according to claim 2, **characterised in that** the mounting brackets (76) engage with the multipart structure so as to permit limited longitudinal relative movement therebetween.

4. A method according to claims 2 or 3, **characterised in that** existing mounting brackets (74) on the pipe are removed.

5. A method according to claims 2 or 3, **characterised in that** existing mounting brackets (74) on the pipe are left in place, and the multipart structure sealingly locates around the existing mounting brackets.

6. A method according to any of the preceding claims, **characterised in that** the parts of the multipart structure each extend for substantially 180° coaxially with the pipe.

7. A kit of parts for repairing a pipe (72), comprising:
two end members (12) engageable together, mountable on the pipe around an area to be repaired, with each end member including two parts (10) which each extend for substantially 180° coaxially with the pipe, the end members being configured to encircle the pipe such that the parts can be located onto the pipe in situ, each end member being for defining a seal around the pipe to provide two spaced seals around the pipe, one on either side of the area to be repaired;
one or more intermediate members (38, 46, 70), with each intermediate member including two parts (36, 44, 68) which extend for substantially 180° coaxially with the pipe to be repaired, the intermediate members extendable between the two end members to define a confined space extending within the end members and within the one or more intermediate members around the gas pipe to be repaired, between the two spaced seals; and
a settable material for filling the confined space to produce a solid seal around the area being repaired.

8. A kit of parts according to claim 7, **characterised in that** each end member (12) defines a first cylindrical space towards an end of the end member, which first cylindrical space is a sliding fit on a pipe to be repaired, and provides a seal around a pipe to be repaired, and each end member defines a second cylindrical space, spaced from an end of the end member, which second cylindrical space defines an annular confined space around a pipe to be repaired.

9. A kit of parts according to claim 7 or 8, **characterised in that** the end members (76) include connecting formations (32) engageable with the ends of intermediate members.

10. A kit of parts according any of claims 7 to 9, **characterised in that** one of the one or more intermediate members (38, 46, 70) includes encasing formations including an opening (56) to receive a part of an existing bracket extendable from the pipe to a wall or fixture, to engage around an existing bracket on a pipe.

11. A kit of parts according to any of claims 7 to 10, **characterised in that** the one or more intermediate members (38, 46, 70) are offset on opposite sides of a pipe such that joins between intermediate members on one side of the pipe are not opposite joins between intermediate members on the other side of the pipe.

## Patentansprüche

1. Verfahren zum Reparieren eines Rohrs (72), wobei das Verfahren umfasst:
Montage einer mehrteiligen Struktur am Rohr um einen zu reparierenden Bereich herum, wobei die mehrteilige Struktur umfasst:
zwei Endelemente (12), wobei jedes Endelement zwei Teile (10) enthält, die sich jeweils im Wesentlichen um 180 ° koaxial zu dem Rohr erstrecken und miteinander in Eingriff bringbar sind, wobei jedes Endelement zum Definieren einer Dichtung um das Rohr herum dient, und
eines oder mehrere Zwischenelemente (38, 46, 70), wobei jedes Zwischenelement zwei Teile (36, 44, 68) enthält, die sich im Wesentlichen um 180 ° koaxial zu dem zu reparierenden Rohr erstrecken, wobei das eine oder die mehreren Zwischenelemente zwischen den zwei Endelementen erstreckbar sind, um einen abgegrenzten Raum um das zu reparierende Gas-Rohr herum zwischen den beiden Endelementen zu definieren,
wobei die Teile in Kombination das Rohr so umgeben, dass die Teile vor Ort auf dem Rohr angeordnet werden können, wobei die Endelemente (12) zwei beabstandete Dichtungen um das Rohr herum bereitstellen, eine auf jeder Seite des zu reparierenden Bereichs, wobei die mehrteilige Struktur den abgegrenzten Raum definiert, der sich innerhalb der Endelemente und innerhalb des einen oder der mehreren Zwischenelemente um das Rohr zwischen den beiden Dichtungen erstreckt, und
Füllen des abgegrenzten Raums mit einem aushärtbaren Material, um eine feste Abdichtung um den zu reparierenden Bereich herum zu erzeugen.

2. Verfahren nach Anspruch 1, **dadurch gekennzeichnet, dass** das Verfahren umfasst
Befestigen von zwei neuen Halterungen (76) an einer Wand oder einer anderen Befestigung, wobei die Montage-Halterungen mit der mehrteiligen Struktur in Eingriff sind.

3. Verfahren nach Anspruch 2, **dadurch gekennzeichnet, dass** die Montage-Halterungen (76) mit der mehrteiligen Struktur in Eingriff sind, um eine begrenzte relative Längsbewegung dazwischen zu ermöglichen.

4. Verfahren nach Anspruch 2 oder 3, **dadurch gekennzeichnet, dass** am Rohr vorhandene Montage-Halterungen (74) entfernt werden.

5. Verfahren nach den Ansprüchen 2 oder 3, das **dadurch gekennzeichnet ist, dass** vorhandene Montage-Halterungen (74) am Rohr an Ort und Stelle belassen werden und die mehrteilige Struktur dichtend um die vorhandenen Montage-Halterungen angeordnet ist.

6. Verfahren nach einem der vorhergehenden Ansprüche, das **dadurch gekennzeichnet ist, dass** sich die Teile der mehrteiligen Struktur jeweils im Wesentlichen um 180 ° koaxial zu dem Rohr erstrecken.

7. Teilesatz zur Reparatur eines Rohrs (72), umfassend:
zwei Endelemente (12), die miteinander in Eingriff stehen und an dem Rohr um einen zu reparierenden Bereich montiert werden können, wobei jedes Endelement zwei Teile (10) enthält, die sich jeweils im Wesentlichen um 180 ° koaxial zu dem Rohr erstrecken, wobei die Endelemente so konfiguriert sind, dass sie das Rohr so umgeben, dass die Teile vor Ort auf dem Rohr angeordnet werden können, wobei jedes Endelement dazu vorgesehen ist, eine Dichtung um das Rohr herum zu definieren, um zwei beabstandete Dichtungen um das Rohr herum bereitzustellen, eine auf jeder Seite des zu reparierenden Bereichs,
eines oder mehrere Zwischenelemente (38, 46, 70), wobei jedes Zwischenelement zwei Teile (36, 44, 68) enthält, die sich im Wesentlichen um 180 ° koaxial zu dem zu reparierenden Rohr erstrecken, wobei die Zwischenelemente zwischen den beiden Endelementen erstreckbar sind, um einen abgegrenzten Raum zu definieren, der sich innerhalb der Endelemente und innerhalb des einen oder der mehreren Zwischenelemente um das zu reparierende Gas-Rohr zwischen den beiden beabstandeten Dichtungen erstreckt, und
ein aushärtbares Material zum Füllen des abgegrenzten Raums, um eine feste Abdichtung um den zu reparierenden Bereich herum zu erzeugen.

8. Teilesatz nach Anspruch 7, **dadurch gekennzeichnet, dass** jedes Endelement (12) einen ersten zylindrischen Raum in Richtung eines Endes des Endelements definiert, wobei der erste zylindrische Raum eine Gleitpassung an einem zu reparierenden Rohr ist und eine Dichtung um ein zu reparierendes Rohr bereitstellt, und wobei jedes Endelement einen zweiten zylindrischen Raum definiert, der von einem Ende des Endelements beabstandet ist, wobei der zweite zylindrische Raum einen ringförmigen abgegrenzten Raum um ein zu reparierendes Rohr definiert.

9. Teilesatz nach Anspruch 7 oder 8, **dadurch gekennzeichnet, dass** die Endelemente (76) Verbindungsformationen (32) aufweisen, die mit den Enden von Zwischenelementen in Eingriff bringbar sind.

10. Teilesatz nach einem der Ansprüche 7 bis 9, **dadurch gekennzeichnet, dass** eines des einen Zwischenelements oder der mehreren Zwischenelemente (38, 46, 70) Einhausungsformationen einschließlich einer Öffnung (56) umfasst, um einen Teil einer vorhandenen Halterung aufzunehmen, die von dem Rohr zu einer Wand oder Befestigung erstreckbar ist, um eine vorhandene Halterung an einem Rohr zu umgreifen.

11. Teilesatz nach einem der Ansprüche 7 bis 10, **gekennzeichnet dadurch, dass** das eine Zwischenelement oder die mehreren Zwischenelemente (38, 46, 70) versetzt an gegenüberliegenden Seiten des Rohrs sind derart, dass Verbindungen zwischen Zwischenelementen an einer Seite des Rohrs Verbindungen zwischen Zwischenelementen an einer anderen Seite des Rohrs nicht gegenüberliegen.

## Revendications

1. Procédé de réparation d'un tuyau (72), le procédé comprenant les étapes consistant à :
monter une structure en plusieurs parties sur le tuyau autour d'une zone à réparer, la structure en plusieurs parties comprenant :
deux éléments d'extrémité (12), chaque élément d'extrémité comprenant deux parties (10) qui s'étendent chacune sur sensiblement 180° coaxialement avec le tuyau, pouvant s'engager ensemble, chaque élément d'extrémité étant destiné à définir un joint autour du tuyau, et
un ou plusieurs éléments intermédiaires (38, 46, 70), chaque élément intermédiaire comprenant deux parties (36, 44, 68) qui s'étendent sur sensiblement 180° coaxialement avec le tuyau à réparer, lesdits un ou plusieurs éléments intermédiaires pouvant s'étendre entre les deux éléments d'extrémité pour définir un espace confiné autour de la conduite de gaz à réparer, entre les deux éléments d'extrémité,
les parties en combinaison entourant le tuyau de telle sorte que les parties peuvent être placées sur le tuyau in situ, les éléments d'extrémité (12) fournissant deux joints espacés autour du tuyau, un de chaque côté de la zone à réparer, la structure en plusieurs parties définissant l'espace confiné s'étendant à l'intérieur des éléments d'extrémité et à l'intérieur desdits un ou plusieurs éléments intermédiaires autour du tuyau entre les deux joints,
et
remplir l'espace confiné avec un matériau durcissable pour produire un joint solide autour de la zone à réparer.

2. Procédé selon la revendication 1, **caractérisé en ce que** le procédé comprend la fixation de deux nouveaux supports (76) sur un mur ou une autre fixation, lesdits supports de montage s'engagent avec la structure en plusieurs parties.

3. Procédé selon la revendication 2, **caractérisé en ce que** les supports de montage (76) s'engagent avec la structure en plusieurs parties de manière à permettre un mouvement relatif longitudinal limité entre elles.

4. Procédé selon les revendications 2 ou 3, **caractérisé en ce que** les supports de montage existants (74) sur le tuyau sont supprimés.

5. Procédé selon les revendications 2 ou 3, **caractérisé en ce que** les supports de montage existants (74) sur le tuyau sont laissés en place, et la structure en plusieurs parties se situe de manière étanche autour des supports de montage existants.

6. Procédé selon l'une quelconque des revendications précédentes, **caractérisé en ce que** les parties de la structure en plusieurs parties s'étendent chacune sensiblement sur 180° coaxialement avec le tuyau.

7. Kit de parties pour réparer un tuyau (72), comprenant :
deux éléments d'extrémité (12) pouvant s'engager ensemble, pouvant être montés sur le tuyau autour d'une zone à réparer, chaque élément d'extrémité comprenant deux parties (10) qui s'étendent chacune sur sensiblement 180 ° coaxialement avec le tuyau, les éléments d'extrémité étant configurés pour encercler le tuyau de sorte que les parties puissent être placées sur le tuyau in situ, chaque élément d'extrémité étant destiné à définir un joint autour du tuyau pour fournir deux joints espacés autour du tuyau, un de part et d'autre de la zone à réparer ;
un ou plusieurs éléments intermédiaires (38, 46, 70), chaque élément intermédiaire comprenant deux parties (36, 44, 68) qui s'étendent sensiblement sur 180° coaxialement avec le tuyau à réparer, les éléments intermédiaires pouvant s'étendre entre les deux éléments d'extrémité pour définir un espace confiné s'étendant à l'intérieur des éléments d'extrémité et à l'intérieur desdits un ou plusieurs éléments intermédiaires autour du tuyau de gaz à réparer, entre les deux joints espacés ; et
un matériau durcissable pour remplir l'espace confiné afin de produire un joint étanche autour de la zone à réparer.

8. Kit de parties selon la revendication 7, **caractérisé en ce que** chaque élément d'extrémité (12) définit un premier espace cylindrique vers une extrémité de l'élément d'extrémité, lequel premier espace cylindrique est un emboîtement coulissant sur un tuyau à réparer, et assure un joint autour d'un tuyau à réparer, et chaque élément d'extrémité définit un deuxième espace cylindrique, espacé d'une extrémité de l'élément d'extrémité, lequel deuxième espace cylindrique définit un espace confiné annulaire autour d'un tuyau à réparer.

9. Kit de parties selon la revendication 7 ou 8, **caractérisé en ce que** les éléments d'extrémité (76) comprennent des formations de liaison (32) pouvant s'engager avec les extrémités d'éléments intermédiaires.

10. Kit de parties selon l'une quelconque des revendications 7 à 9, **caractérisé en ce que** l'un desdits un ou plusieurs éléments intermédiaires (38, 46, 70) comprend des formations d'encastrement comprenant une ouverture (56) pour recevoir une partie d'un support existant pouvant s'étendre depuis le tuyau jusqu'à un mur ou à un appareil, pour s'engager autour d'un support existant sur un tuyau.

11. Kit de parties selon l'une quelconque des revendications 7 à 10, **caractérisé en ce que** lesdits un ou plusieurs éléments intermédiaires (38, 46, 70) sont décalés sur des côtés opposés d'un tuyau de telle sorte que les jointures entre des éléments intermédiaires d'un côté du tuyaux ne sont pas des jointures opposées entre les éléments intermédiaires de l'autre côté du tuyau.
